# EUROPEAN PATENT SPECIFICATION

(11) **EP 0 572 759 B1**
(45) Date of publication and mention of the grant of the patent: **15.05.1996**
(21) Application number: 92850125.3
(22) Date of filing: 03.06.1992
(51) Int. Cl.: F02G 1/02, F01C 11/00, F02C 3/055

(54) **An internal combustion engine system**
Antriebsmaschine mit innerer kontinuierlicher Verbrennung
Moteur à combustion continue interne

(43) Date of publication of application: 08.12.1993
(73) Proprietor: Larsson, Dan, S-912 00 Vilhelmina (SE)
(72) Inventor: Larsson, Dan, S-912 00 Vilhelmina (SE)
(74) Representative: Onn, Thorsten

(56) References cited:
- EP-A- 0 463 818
- CH-A- 564 685
- US-A- 3 886 734
- US-A- 4 212 162

## Description

The present invention relates to an internal combustion engine system based on continuous internal combustion with the aid of sequentially arranged, mutually separate mechanical devices for the compression of combustion air, combustion and expansion, and with cooling and exhaust gas purification or cleansing integrated in the expansion cycle.

The efficiency and power density, i.e. the power-wait-ratio, of an internal combustion engine is based mainly on three criteria:
1. Pressure level (compression pressure).
2. Temperature increase of the working medium.
3. The thermal properties of the working medium.

Combustion engines can be divided into two main groups:
1. Internal combustion engines (i.e. the working medium is the same as the combustion medium).
2. External combustion engines (i.e. combustion is separate from the working medium).

Examples of external combustion engines are the steam engine and the Stirling engine. The steam engine can be driven with the emission of clean exhaust gases, although this engine works at a relatively low pressure level and temperature increase. The working medium is a relatively low-grade medium. The Stirling engine, on the other hand, operates at a high pressure level (220 bars) and the working medium used is a high-grade medium (helium or hydrogen gas). The exhaust gases can be cleansed to a high degree. The problem of the Stirling engine resides in the manner in which the engine operates, with the transfer of heat from the combustion gas to the working gas through the intermediary of a heat exchanger, which in view of the limitations of the materials at present available limit the working gas temperature to slightly above 1000°C. It can be mentioned that twice this temperature can be reached in a diesel engine.

Examples of internal combustion engines include gas turbines and the conventional piston engine. The gas turbine has a low efficiency due to low pressure level, particularly in the case of part loads, but is highly effective because of the high gas throughput, i.e. has a high power-wait-ratio which renders the gas turbine highly suitable as an aircraft engine.

In the case of piston engines, the carburetor engine or Otto engine is limited because the compression ratio will not permit higher pressure levels than those at which the fuel-air-mixture is not ignited before the piston has reached its top-dead-centre position. The Vankel engine has the same limitation as the Otto engine, and the combustion chamber of the Vankel engine is surrounded by cold surfaces which are large in relation to the gas volume, resulting in a higher percentage of non-combusted hydrocarbons. The diesel engine has the highest efficiency of all engines known at present, partly because it operates at a high pressure level and partly because it has a high temperature increase (high combustion temperature). Combustion takes place directly in the working medium and consequently there is no problem with heat transfer through any form of material at high pressures and temperatures, as distinct from the case in external combustion engines. Neither does the diesel engine present a serious problem with regard to the cleansing of exhaust gas. When combusting at high pressures and high temperatures, the nitrogen and oxygen contained in the air are converted to oxides of nitrogen and because combustion is intermittent and takes place in a chamber surrounded by cold walls, non-combusted hydrocarbons will accompany the exiting exhaust gases.

Through US-A-4 212 162 is known a external, constant combustion engine, using one stroke of the engine to compress air charged into the external combustion chamber. The combustion products - including water vapor - is charged into the working chamber of the engine to drive the rotor. The exhaused gases are discharged outside directly from the working chamber. The constant combustion in one stage means a low efficiency and the emission of toxic gases to environment.

The object of the present invention is to provide a combustion engine of high efficiency which will fulfil the environmental requirements of clean exhaust gases and low sound and vibration levels. The present invention relates to an internal combustion engine having a high pressure and a high temperature level and with continuous combustion in a separate combustion chamber and with recovery of exhaust gas impurities.

This object is achieved by means of a combustion engine system which has the characteristic features set forth in the following claims, this system providing an internal combustion engine having a high pressure and a high temperature level and operating with a continuous process and with highly purified exhaust gases.

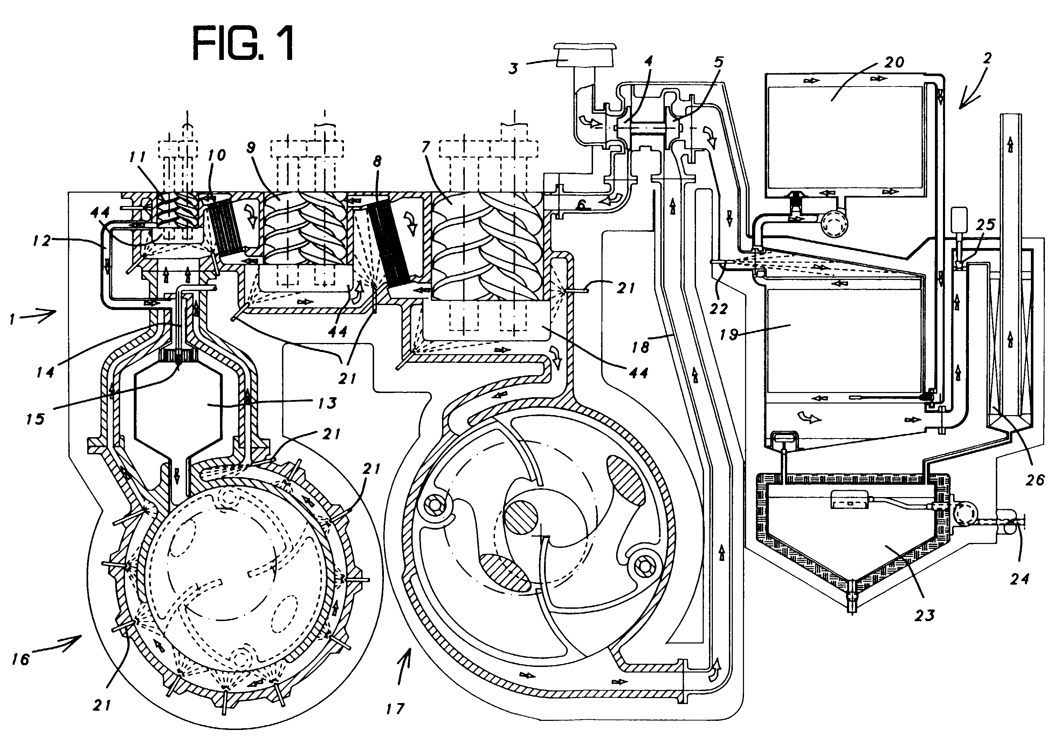

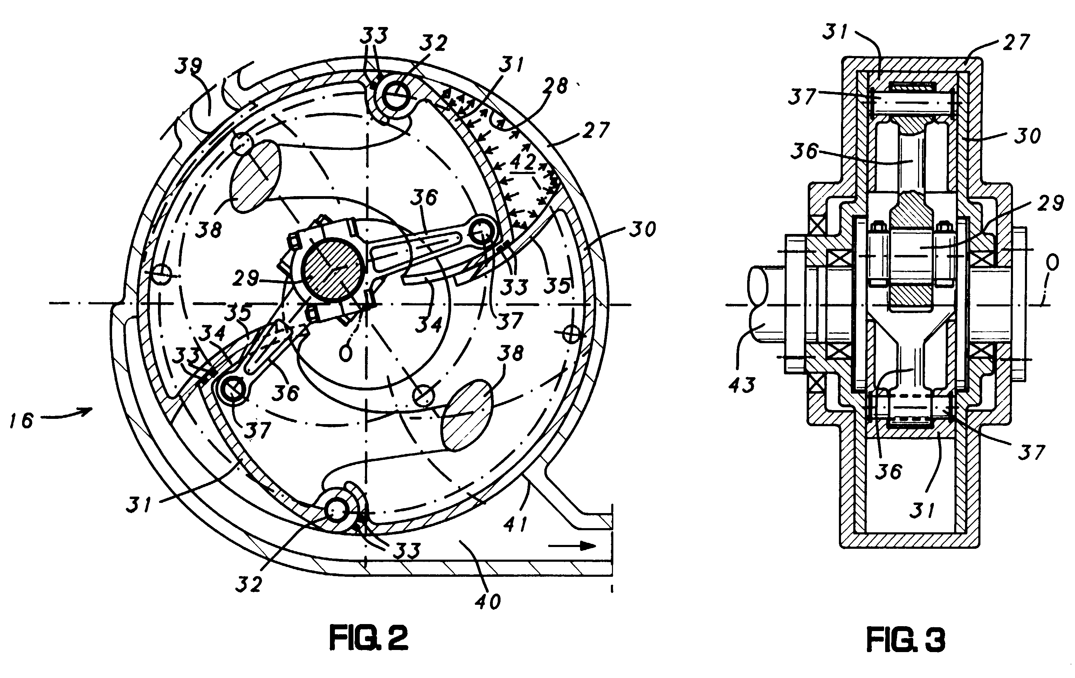

The invention will now be described in more detail with reference to an exemplifying embodiment thereof and also with reference to the accompanying drawings, in which Figure 1 is a schematic, sectional view of an inventive combustion engine system; Figure 2 is a schematic view of an expansion rotor forming part of the inventive system, said view being seen transversely to the axis of rotation; and Figure 3 is a schema tic view of the expansion rotor, but with the pistons shown in different positions to those shown in Figure 2, said view being taken along the axis of rotation.

As will be evident from the following, the invention is based on the concept of an internal combustion cycle with stepwise compression and expansion in separate mechanical devices and with separate combustion chambers. This enables the mechanical requirements for each function to be optimized with respect to its purpose and also enables the thermodynamic process to be accessible and actuable both on the compression side and on the expansion side. The first and the last stage of the system is a turbo compressor, a centrifugal compressor driven by the exhaust gases, since dynamic compression results in the lowest mechanical losses in relation to pressure conversion at these pressure levels. This is followed by incremental or stepwise compression with the aid of displacement type compressors, a combustion chamber with continuous combustion, and thereafter an incremental or stepwise expansion in an expansion mechanism in the form of expansion rotors.

The inventive combustion system includes a radiator-condenser 2, and an engine block 1 which includes the mechanical devices necessary to the function of the combustion engine system.

The combustion air required by the combustion process is sucked in through an air filter 3 with the aid of a centrifugal compressor 4, driven by an exhaust gas turbine 5 - a so-called turbo compressor. Combustion air is introduced through a line 6 to a first displacement compressor in the form of a screw compressor 7, and from there to a second screw compressor 9, via a heat exchanger 8. The compressed combustion air is conducted from the second screw compressor through a second heat exchanger 10 and to the last compression stage which has the form of a third screw compressor 11. The compressed combustion air is then passed through a line 12 to a combustion chamber 13. Fuel is continuously delivered to the combustion chamber through a fuel delivery line 14 provided with a nozzle 15, thereby to maintain continuous combustion in the combustion chamber 13.

The requisite "mechanical barrier" between compression pressure and expansion pressure, which also exists in this combustion engine system, must have a continuous function, and consequently the last compressor 11 operates as a "barrier" so as to take-up the pressure difference between compression pressure and combustion pressure.

Although a three-stage compression process has been described, it will be understood that the invention is not restricted to precisely this number of stages, said number, of course, being contingent on the desired working pressure and can be varied accordingly. The heat exchangers 8 and 10 are intended to cool the compressed combustion air sucked into the system, the exhaust gases exiting from the expansion stage being used as a coolant, as described hereinafter. However, depending on the power and the pressure conditions desired, the heat exchangers 8 and 10 are not absolutely necessary or, for instance, one heat exchange may be sufficient.

The combustion gas generated by the continuous process of combustion in the combustion chamber, said combustion also being associated with a rise in pressure at the same time, is passed to a first expansion rotor 16, in which the working gas expands and results in mechanical work, and from there back to surrounding upstream expansion and compression mechanisms, as shown by the arrows in the drawing, through the heat exchanger 10 and through the heat exchanger 8 to a second expansion rotor 17. The exhaust gas undergoes a second stage expansion process in the second expansion rotor 17 and is passed from this second rotor through a line 18 and to the earlier mentioned exhaust gas turbine 5, which drives the centrifugal compressor 4, and from there to a condenser 19. In the illustrated embodiment, the condenser is cooled by a conventional air cooler filled, for instance, with a circulating glycol mixture.

Because the inventive combustion engine system operates with high compression and high combustion pressures and temperatures respectively, it is necessary to effectively cool the expansion rotor immediately downstream of the combustion chamber, the screw rotor housings 44 and, when applicable, the heat exchangers. In the case of a diesel engine for instance, about 56% of the input energy is lost in the water coolant and the exhaust gases. Accordingly, the present invention is based on the concept of combining the cooling and exhaust-gas losses so as to reduce, at the same time, the sum of these losses by returning thermal energy from the cooling process to the expansion work at a lower level of pressure and temperature, i.e. to the downstream expansion stage, while at the same time creating conditions for effective cleansing of the exhaust gases. This division of the expansion work into several stages also enables the process to be influenced. The combustion gas between the last and the penultimate expansion stage (in this case, after the first expansion stage), when pressure and temperature are relatively low, surrounds the compression part and the high pressure part and forms, at the same time, a coolant carrier means. The hot compressors and the high-pressure expansion rotors (in this case, the rotor 16) are therefore sprayed with water from nozzles 21, as shown in Figure 1. The water vapour thus formed is mixed with the exhaust gases, whereby the heat energy cooled-off from the high pressure part is returned to the low pressure part in the following stages of the expansion chain, resulting in a greater volume of working gas and an increase in the useful work gained. The amount of water injected into the exhaust gases is preferably adapted so as to achieve sufficient cooling of the high pressure part while ensuring that the temperature and pressure level of the working gas will not be lowered.

Thus, the exhaust gases will be cooled and the water vapour thereby condensed in the condenser part 19 of the cooler 2. The exhaust gases contain nitrogen dioxide (NO₂) and carbon dioxide (CO₂). Both of these gases are dissolvable in water under certain conditions, and in the described integrated cooling process shall also take part in the cleansing of the exhaust gases. Thus, when water vapour is admixed with the exhaust gases, the nitrogen oxide will be dissolved in the water present to form nitric acid (HNO₃) and the carbon dioxide is dissolved to form carbonic acid (H₂CO₃). The condensed process water thus obtains an acid nature. The process water is neutralized by injecting through a nozzle 22, arranged upstream of the condenser, with water containing a basic addition (e.g. a lime or soda solution). The resultant process water in the condenser is collected in an insulated container 23 mounted beneath the condenser. The process water collected in the container 23 is filtered and returned by means of a pump through a line 24 to the earlier mentioned water nozzles 21, for continued operation of the engine.

A given overpressure can be maintained in the condenser, by mounting a throttle valve 25 downstream thereof, this overpressure enabling the exhaust gases to be cooled in ambient air temperatures, therewith achieving more complete condensation in the part 26 (see Figure 1).

This overpressure in the condenser also contributes in binding the CO₂ present in the form of carbonic acid until the acid is neutralized. This after-condensed water is led to the insulating container 23.

The expansion rotor included in the inventive combustion engine system will now be described in more detail with reference to the Figures 2 and 3. In principle, the high pressure and the low pressure expansion rotors are constructed in mutually the same way, although the size of respective rotors is adapted to the pressure level concerned. The expansion rotor is comprised of a housing 27 which has a cylindrical inner surface 28, and a crank pin 29 affixed to the housing, said crank pin thus lying excentrically in relation to the cylindrical inner surface 28 of the housing 27. A drum 30 can rotate freely within the housing 27. The drum 30 has two segment-shaped pistons 31 which, as shown in Figure 2, form part of the mantle surface of the drum 30. One end, or edge, of respective pistons 31 is pivotally mounted on the drum by means of journal means 32. The piston is sealed against the interior of the drum by means of seals 33 at the location of the journal means. The end or edge of the piston 31 remote from the journal means has an arcuate part 34 whose radius of arc has its centre of rotation in the journal axis 32. The arcuate part 34 coacts with a corresponding arcuate, fixed part 35 of the drum 30. The piston is also sealed against the drum interior at this end, with the aid of seals 33.

Journalled in the crank pin 29 are two crank arms 36, the other ends of which are journalled in the free ends of respective pistons by means of a piston pin 37. As will be seen from Figure 2, each piston 31 carries a counterweight 38, which functions to balance the piston around the journal means 32. An inlet port 39 for the working gases exiting from the combustion chamber 13 is provided in the housing 27 at a radius from the centre 0 of the housing and the drum 30 through the centre of the crank pin. An outlet port 40 is arranged roughly diametrically opposite the inlet port, said outlet port having an outlet edge 41 which embraces an angle of about 130°. The drum is sealed against the housing in the vicinity of the inlet and the outlet ports by means of seals 33.

The manner in which the expansion rotor 16 works will be evident from the aforegoing. A piston 31 is swung-up towards the cylindrical inner surface 28 of the housing 27, between the outlet port 40 and the inlet port 39. When the end of the piston to which the connecting rod 36 is connected approaches the inlet port 39 or is level therewith, the crank pin passes the "top-dead-centre position" and "opens" the piston progressively as the drum 30 rotates. The piston thus creates an expanding enclosed volume 42 which is filled with high-pressure gas which exerts pressure during a following half revolution, resulting in an oppositely directed torque in the fixed crank pin 29 and a corresponding forwardly acting torque in the drum 30, which drives the outward shaft 43 of the expansion rotor (see Figure 1). When the end of the piston 31 connected to the crank pin is located level with the opening edge 41 of the outlet port, the piston is in its most inwardly swung position and the working gas will now leave the expansion space through the outlet port 40. As the piston moves through the outlet port, the piston will become progressively more "closed", therewith forcing out the enclosed gas volume.

Figure 3 illustrates schematically how, among other things, the manner in which the crank pin 29 is attached with the aid of its centre axle to the housing 27 through the intermediary of a flange, and how the drum 30 is journalled on the end of the crank pin distal from said flange. The output shaft 43 is, for instance, firmly bolted to the drum 30 with the aid of a flange. It will be understood that the housing 27 and the crank pin 29 are fixedly mounted in space. Figure 3 shows a piston 32 in its most outwardly-swung position and the other piston in its most inwardly-drawn position. The output shafts 43 of the two expansion rotors of the illustrated embodiment are connected to a drive unit through the intermediary of suitable gears, said drive unit being intended, for instance, to drive a generator, the wheels of an automotive vehicle, the propeller of a boat, etc. The drive unit also drives the three displacement compressors 7, 9 and 11. This is indicated at the top of Figure 1 in broken lines.

The inventive expansion rotor thus works in accordance with the "displacement principle", since it is intended to convert high gas pressure and since the major part of the rotor is constructed rotationally symmetrical with the smallest possible number of reciprocating masses. The ventilation system is fixed and the inventive expansion rotor is able to "breathe" very easily. Thus, the expansion rotor can rotate at very high speeds.

It will also be understood that the number of pistons in the expansion rotor can be varied.

The Carnot process, which is known to all those skilled in this art, assumes thermal activation both on the compression work and in the expansion work. The inventive combustion engine system is not based on the Carnot process, with the exception that the inventive process also involves thermal activation both on the compression work and the expansion work.

This has been made possible by the present invention, as a result of dividing the compression work and the expansion work into separate functions.

Since the arrangement for effecting compression is separated from the arrangement for effecting expansion, a considerable amount of freedom is afforded in the selection of the compression arrangement. Thus, a turbine compressor has been chosen as appropriate means in the first stage of the compression chain, since a turbine compressor has a very high power density and has only small mechanical losses. In order to achieve a sufficiently high pressure level, the following stages in the compression chain must be of the displacement type. The power density should also be very high. Consequently, there has been chosen for the following compression stages in the illustrated embodiment screw compressors of decreasing size inversely proportional to the increasing pressure, which, of course, is a condition for increasing pressures. As before mentioned, the last compressor stage provides the valve function between compression and expansion, so as to enable the increased gas pressure to be transferred to mechanical work via the expansion rotors.

Because combustion is continuous in the separate combustion chamber 13, it is possible to achieve optimal conditions for complete combustion. The inner walls of the combustion chamber will preferably be constructed from a highly heat-resistant material, optionally a ceramic material. The actual flame from the combustion chamber may optionally be enveloped by side air - secondary air of combustion -, so as to enable the highest possible combustion temperature to be reached.

The combustion process is preferably supported with a given air excess, so that combustion will be as complete as possible and so that the nitrogen compounds generated will comprise essentially nitrogen dioxide (NO₂).

Because the inventive combustion engine system operates with continuous combustion and because all mechanical functions are essentially rotationally symmetrical and the whole of the process of thermally insulated from the surroundings, the sound and vibrations generated will only be a small part of the sound and vibrations generated by a corresponding piston engine.

The present invention can be said to provide an internal combustion engine that is based on a continuous high pressure cycle combined with an open steam cycle, thereby resulting in a very high efficiency, and where the steam cycle also functions to cool the high pressure cycle and to produce clean exhaust gases. The combustion system will accept the majority of fuels established at present.

It will also be understood that it lies within the concept of the invention to vary the number of expansion rotors provided and that the combustion engine system will also function satisfactorily without the described turbocompressor 4, 5. It will also be understood that more high-pressure expansion rotors can be used, wherein the working gas from one such rotor is intended to surround an upstream rotor or rotors so as to cool said rotor or rotors and increase the efficiency of the system. Furthermore, the aforesaid base may be introduced directly into the container 23 instead of being injected through a nozzle 22.

## Claims

1. A combustion engine system based on continuous internal combustion and comprising sequentially arranged mechanical devices (7, 9, 11) for compression of the combustion air, combustion and expansion, and with cooling and exhaust gas cleansing functions integrated with the expansion function and whereby the combustion arrangement (16, 17) is comprised of a combustion chamber (13) into which one or more fuel delivery devices (14, 15) discharge and whereby the expansion arrangement comprises at least two positive displacement-type expansion rotors in series which are coupled mechanically to form an output drive shaft of the combustion engine system, **characterized** in that the mechanical devices (7,9,11) for compression of the combustion air, combustion and expansion are mutually separate; in that the devices for compression of the combustion air includes at least two positive displacement compressors (7, 9, 11) arranged in series and of which the last compressor (11), as seen in the flow direction of the combustion air, forms a pressure barrier between the compression pressure and the combustion pressure; in that the working gas downstream of at least the expansion rotor (16) located nearest the combustion chamber (13) is intended to surround said rotor and the aforesaid preceding compression arrangement (7, 8, 11); in that at least the walls of the expansion rotor (16) located nearest the combustion chamber are cooled by means of a liquid coolant (21) which is absorbed in the exhaust gases from the said expansion rotor (16); and in that there is arranged downstream of the last expansion rotor (17) as seen in the flow direction of the exhaust gases a condenser (19) which functions to cool the exhaust gases and to condense the vapour phase of the liquid coolant present therein.

2. A system according to claim 1, **characterized** in that an exhaust-gas driven rotary compressor (4) is arranged upstream of the displacement compressors (7, 9, 11).

3. A system according to claim 1 or 2, **characterized** in that a combustion-air cooling device (8, 10) is arranged between two or more of the displacement compressors.

4. A system according to claim 3, **characterized** in that the combustion-air cooling device (8, 10) is through-passed by the return exhaust gases from a preceding expansion rotor (16).

5. A system according to any one of the preceding claims, **characterized** in that the positive displacement compressors (7, 9, 11) are screw compressors.

6. A system according to any one of the preceding claims, **characterized** in that the liquid coolant is water.

7. A system according to any one of the preceding claims, **characterized** in that injection means (22) for the injection of a basic substance is provided in or immediately upstream of the condenser (19) or in a water container (23) connected to said condenser.

8. A system according to any one of the preceding claims, **characterized** by a conventional air cooler (20) for cooling the condenser (19).

9. A system according to any one of the preceding claims, **characterized** in that mounted in the exhaust gas outlet downstreams of the condenser (19) is a throttle valve (25) which functions to maintain an exhaust-gas overpressure in the condenser.

10. A system according to any one of the preceding claims, **characterized** in that the expansion rotor (16, 17) comprises a housing (27), a crank pin (29) mounted excentrically within the housing and attached firmly thererto, a drum (30) which is rotatable in the housing and the peripheral surface of which carries at least two inwardly swingable segment-shaped pistons (31), said pistons being journalled in journals (32) at respective one ends thereof and forming a part of said peripheral surface, in that the other ends of respective pistons (31) have an arcuate sealing surface (34) with the rotational centre in the journal axle (32) of the piston and coacting with a correspondingly arcuate, inwardly directed drum surface (35); in that a connecting rod (36) carried by the crank pin (29) is journalled at said other end of the piston (31); in that a combustion gas inlet port (39) is provided in the housing and located generally adjacent a radial extending from the centre axle (0) of the housing and including the crank pin; and in that the outlet defining edge (41) of the outlet port (40) is essentially diametrically opposed to the inlet port (39).

11. A system according to claim 10, **characterized** in that the opening defining edge of the inlet port (39) is located on said radial.

12. A system according to claim 10 or 11, **characterized** in that the outlet port (40) embraces an angle of about 130°.

13. A system according to claims 10-12, **characterized** in that respective pistons (31) are provided with a counterweight (38) so as to balance respective pistons about their journals (32).

14. A system according to any one of claims 10-13, **characterized** in that the output shaft (43) of the rotor (16, 17) connects with the rotatable drum (30).

15. A system according to any one of the preceding claims, **characterized** in that the housing (44) surrounding the displacement compressors (7, 9, 11) is cooled by means of the liquid coolant.

## Patentansprüche

1. Verbrennungsmaschinensystem, das auf kontinuierlicher innerer Verbrennung beruht und hintereinander angeordnet mechanische Vorrichtungen (7, 9, 11) zur Kompression der Verbrennungsluft, Verbrennung und Expansion aufweist, und mit Kühl- und Abgasreinigungsfunktionen, die mit der Expansionsfunktion integriert sind, und wobei die Verbrennungsanordnung (16, 17) aus einer Brennkammer (13) gebildet ist, in die eine oder mehrere Kraftstoffausgabevorrichtungen (14, 15) münden,und wobei die Expansionsanordnung wenigstens zwei Expansionsrotoren vom Typ echter Verdrängung aufweist, die zur Bildung einer Ausgangsantriebswelle des Verbrennungsmaschinensystems mechanisch gekoppelt sind,
**dadurch gekennzeichnet**,
daß die mechanischen Vorrichtungen (7, 9, 11) zur Kompression der Verbrennungsluft, Verbrennung und Expansion voneinander getrennt sind; daß die Vorrichtungen zur Kompression der Verbrennungsluft wenigstens zwei echte Verdrängungskompressoren (7, 9, 11) aufweisen, die in Serie angeordnet sind und von denen der letzte Kompressor (11), gesehen in Flußrichtung der Verbrennungsluft, eine Druckbarriere zwischen dem Kompressionsdruck und dem Verbrennungsdruck bildet; daß das Arbeitsgas stromab wenigstens des der Brennkammer (13) am nächsten angeordneten Expansionsrotors (16) dazu dient, den Rotor und die genannte vorgeschaltete Kompressionsanordnung (7, 9, 11) zu umgeben; daß wenigstens die Wände des der Brennkammer am nächsten angeordneten Expansionsrotors (16) durch flüssiges Kühlmittel (21) gekühlt werden, das in den Abgasen von dem Expansionsrotor (16) absorbiert wird; und daß stromab des letzten Expansionsrotors (17), gesehen in Flußrichtung der Abgase, ein Kondensator (19) angeordnet ist, der die Wirkung hat, die Abgase zu kühlen und die Dampfphase des darin vorhandenen flüssigen Kühlmittels zu kondensieren.

2. System nach Anspruch 1, dadurch gekennzeichnet, daß ein abgasgetriebener Rotationskompressor (4) stromauf der Verdrängungskompressoren (7, 9, 11) angeordnet ist.

3. System nach Anspruch 1 oder 2, **dadurch gekennzeichnet**, daß eine Verbrennungsluftkühlvorrichtung (8, 10) zwischen zwei oder mehreren der Verdrängungskompressoren angeordnet ist.

4. System nach Anspruch 3, **dadurch gekennzeichnet**, daß die Verbrennungsluftkühlvorrichtung (8, 10) von rücklaufenden Abgasen aus einem vorgeschalteten Expansionsrotor (16) durchströmt wird.

5. System nach einem der vorhergehenden Ansprüche, **dadurch gekennzeichnet**, daß die echten Verdrängungskompressoren (7, 11) Schraubenkompressoren sind.

6. System nach einem der vorhergehenden Ansprüche, dadurch gekennzeichnet, daß das flüssige Kühlmittel Wasser ist.

7. System nach einem der vorhergehenden Ansprüche, **dadurch gekennzeichnet**, daß ein Einspritzmittel (22) zum Einspritzen einer basischen Substanz in oder unmittelbar stromauf des Kondensators (19) oder in einem mit dem Kondensator verbundenen Wasserbehälter (23) vorgesehen ist.

8. System nach einem der vorhergehenden Ansprüche, **gekennzeichnet durc**h einen herkömmlichen Luftkühler (20) zum Kühlen des Kondensators (19).

9. System nach einem der vorhergehenden Ansprüche, **dadurch gekennzeichnet**, daß in dem Abgasauslaß stromab des Kondensators (19) ein Drosselventil (25) angebracht ist, das die Wirkung hat, in dem Kondensator einen Abgasüberdruck zu halten.

10. System nach einem der vorhergehenden Ansprüche, **dadurch gekennzeichnet,** daß der Expansionsrotor (16, 17) ein Gehäuse (27) umfaßt, einen Kurbelzapfen (29), der exzentrisch in dem Gehäuse angeordnet und an diesem fest angebracht ist, eine Trommel (30), die in dem Gehäuse drehbar ist und deren Umfangsfläche wenigstens zwei nach innen verschwenkbare, segmentförmige Kolben (31) trägt, wobei die Kolben jeweils an einem ihrer Enden in Lagern (32) schwenkbar sind und einen Teil der Umfangsfläche bilden; daß die anderen Enden der jeweiligen Kolben (31) eine bogenförmige Dichtfläche (34) aufweisen, deren Drehzentrum in der Schwenkachse (32) des Kolbens liegt und die mit einer entsprechend bogenförmigen, nach innen gerichteten Trommelfläche (35) zusammenwirken; daß eine von dem Kurbelzapfen (29) gehaltene Verbindungsstange (36) an dem anderen Ende des Kolbens (31) angelenkt ist; daß ein Verbrennungsgaseinlaßdurchgang (39) in dem Gehäuse vorgesehen und im wesentlichen nahe einer Radialen angeordnet ist, die von der Mittelachse (0) des Gehäuses verläuft und den Kurbelzapfen einschließt; und daß der den Auslaß bildende Rand (41) des Auslaßdurchgangs (40) dem Einlaßdurchgang (39) im wesentlichen diametral gegenüberliegt.

11. System nach Anspruch 10, **dadurch gekennzeichnet**, daß die den Rand des Einlaßdurchgangs (39) bildende Offnung auf der Radialen angeordnet ist.

12. System nach Anspruch 10 oder 11, **dadurch gekennzeich** **net,** daß der Auslaßdurchgang (40) einen Winkel von etwa 130° umschließt.

13. System nach den Ansprüchen 10 - 12, **dadurch gekennzeichnet**, daß die jeweiligen Kolben (31) mit einem Gegengewicht (38) versehen sind, um die jeweiligen Kolben um ihre Lager (32) herum auszubalancieren.

14. System nach einem der Ansprüche 10 - 13, **dadurch gekennzeichnet**, daß die Ausgangswelle (43) des Rotors (16, 17) mit der drehbaren Trommel (30) verbunden ist.

15. System nach einem der vorhergehenden Ansprüche, **dadurch gekennzeichnet**, daß das die Verdrängungskompressoren (7, 9, 11) umgebende Gehäuse (44) durch das flüssige Kühlmittel gekühlt wird.

## Revendications

1. Système de moteur à combustion basé sur une combustion continue interne et comprenant des dispositifs mécaniques (7, 9, 11) agencés séquentiellement pour la compression de l'air de combustion, la combustion et l'expansion, et avec des fonctions de refroidissement et de nettoyage de gaz d'échappement intégrées à la fonction d'expansion, et par quoi l'agencement de combustion (16, 17) comprend une chambre de combustion (13) dans laquelle un ou plusieurs dispositifs d'émission de combustible (14, 15) évacuent, et par quoi l'agencement d'expansion comprend au moins deux rotors d'expansion du type à déplacement positif, en série, qui sont accouplés mécaniquement pour former un arbre menant de sortie du système de moteur de combustion, caractérisé en ce que les dispositifs mécaniques (7, 9, 11) pour la compression de l'air de combustion, la combustion et l'expansion sont mutuellement séparés; en ce que les dispositifs pour la compression de l'air de combustion comportent au moins deux compresseurs à déplacement positif (7, 9, 11) disposés en série et dont le dernier compresseur (11), en regardant dans la direction d'écoulement de l'air de combustion, forme une barrière de pression entre la pression de compression et la pression de combustion; en ce que le gaz travaillant en aval au moins du rotor d'expansion (16) se trouvant le plus proche de la chambre de combustion (13) est destiné à entourer ledit rotor et l'agencement de compression précédant précité (7, 8, 11); en ce qu'au moins les parois du rotor d'expansion (16) se trouvant le plus près de la chambre de combustion sont refroidies au moyen d'un agent de refroidissement liquide (21) qui est absorbé dans les gaz d'échappement par ledit rotor d'expansion (16); et en ce qu'il est agencé, en aval du dernier rotor d'expansion (17), en regardant dans la direction d'écoulement des gaz d'échappement, un condenseur (19) qui fonctionne pour refroidir les gaz d'échappement et pour condenser la phase vapeur de l'agent de refroidissement liquide présent dans celui-ci.

2. Système selon la revendication 1, caractérisé en ce qu'un compresseur rotatif (4) entraîné par le gaz d'échappement est agencé en amont des compresseurs de déplacement (7, 9, 11).

3. Système selon la revendication 1 ou 2, caractérisé en ce qu'un dispositif de refroidissement de l'air de combustion (8, 10) est disposé entre deux ou plusieurs des compresseurs de déplacement.

4. Système selon la revendication 3, caractérisé en ce que les gaz d'échappement de retour d'un rotor d'expansion précédent (16) passent à travers le dispositif de refroidissement de l'air de combustion (8, 10).

5. Système selon l'une des revendications précédentes, caractérisé en ce que les compresseurs à déplacement positif (7, 11) sont des compresseurs à vis.

6. Système selon l'une des revendications précédentes, caractérisé en ce que l'agent de refroidissement liquide est de l'eau.

7. Système selon l'une des revendications précédentes, caractérisé en ce qu'un moyen d'injection (22) pour l'injection d'une substance de base est prévu dans ou directement en amont du condenseur (19) ou dans un réservoir d'eau (23) relié audit condenseur.

8. Système selon l'une des revendications précédentes, caractérisé par un dispositif de refroidissement d'air classique (20) pour refroidir le condenseur (19).

9. Système selon l'une des revendications précédentes, caractérisé en ce qu'il est disposé dans la sortie du gaz d'échappement en aval du condenseur (19) un papillon (25) qui fonctionne pour maintenir une surpression du gaz d'échappement dans le condenseur.

10. Système selon l'une des revendications précédentes, caractérisé en ce que le rotor d'expansion (16, 17) comprend un boîtier (27), un axe de manivelle (29) monté excentriquement dans le boîtier et fixé solidement à celui-ci, un tambour (30) pouvant tourner dans le boîtier et dont la surface périphérique porte au moins deux pistons (31) en forme de segment pouvant pivoter vers l'intérieur, lesdits pistons étant montés tourillonnants dans des tourillons (32) à l'une de leurs extrémités respectives et font partie de ladite surface périphérique, en ce que les autres extrémités des pistons respectifs (31) ont une surface d'étanchéité arquée (34) avec un centre de rotation dans l'axe de tourillon (32) du piston et coopérant avec une surface de tambour (35) arquée de façon correspondante, dirigée vers l'intérieur; en ce qu'une tige de connexion (36) portée par l'axe de manivelle (29) est montée tourillonnante a ladite autre extrémité du piston (31); en ce qu'un orifice d'entrée de gaz de combustion (39) est ménagé dans le boîtier et situé généralement pour être adjacent à une extension radiale s'étendant dudit axe central (0) du boîtier et incluant l'axe de manivelle; et en ce que le bord (41) définissant la sortie de l'orifice de sortie (40) est essentiellement diamétralement opposé à l'orifice d'entrée (39).

11. Système selon la revendication 10, caractérisé on ce que le bord définissant l'ouverture de l'orifice d'entrée (39) est situé sur ladite radiale.

12. Système selon la revendication 10 ou 11, caractérisé en ce que l'orifice de sortie (40) forme un angle d'environ 130°.

13. Système selon les revendications 10-12, caractérisé en ce que des pistons respectifs (31) sont équipés d'un contrepoids (38) de façon à équilibrer des pistons respectifs autour de leurs tourillons (32).

14. Système selon l'une des revendications 10-13, caractérisé en ce que l'arbre de sortie (43) du rotor (16, 17) est relié au tambour rotatif (30).

15. Système selon l'une des revendications précédentes, caractérisé en ce que le boîtier (44) entourant les compresseurs à déplacement (7, 9, 11) est refroidi par l'agent de refroidissement liquide.
